# EUROPEAN PATENT APPLICATION

(11) **EP 3 965 387 A1**
(43) Date of publication of application: **09.03.2022**
(21) Application number: 20194622.5
(22) Date of filing: 04.09.2020
(51) Int. Cl.: H04L 29/06, H04L 12/46, H04L 29/08

(54) **METHOD AND SYSTEM FOR COMMUNICATION BETWEEN CLIENTS IN A DISTRIBUTED INDUSTRIAL ENVIRONMENT**

(71) Applicant: Siemens Aktiengesellschaft, 80333 München (DE)
(72) Inventor: Luckner, Tobias, 90574 Rosstal (DE)

(57) **Abstract**

The invention relates to a method and a system for communication between clients (CL1A, ..., CL2C) in a distributed industrial environment, a first of the clients (CL1A, ..., CL1C) being part of a first cell (C1) and a second client (CL2A, ..., CL2C) being part of a second cell (C2), the cells (C1, C2) connected via at least one communication network. In a first step, the first client (CL1A, ..., CL1C) connects to a MQTT Cluster (CBB) via a first data connection and the second client (CL2A, ..., CL2C) connects to that MQTT cluster (CBB) via a second data connection, and in a second step a common IP connection is established between the clients (CL1A, ..., CL2C) via the first and the second connection, the IP messages of the IP connection being transmitted by the MQTT cluster (CBB). With this method and system, a secure IP connection, in particular a VPN-like IP tunnel, can be initiated by either of the clients, overcoming restrictions of firewalls. The IP connection benefits from the reliable, secure and scalable MQTT cluster, so that any IP connection is reliable, secure and has scalable bandwidth as well.

## Description

The invention relates to a method for communication between clients in a distributed industrial environment according to the preamble of patent claim 1, and to a system for communication between clients in a distributed industrial environment according to the preamble of patent claim 8.

The federated and distributed (cloud-on premise) architecture of the future automation systems requires a bi-directional data transfer between cloud and on-premise to exchange huge amount of data with low latency. It is also required that communication could be established or initiated from both by cloud and on-premise. Communication must be provided reliable; faults must be isolable to secure functioning of the unaffected parts of the system. Applications are integrated stepwise to the future automations system. Thus, communication requires scalability at runtime. In general, three types of communication flow can be distinguished:
- Connectivity Flow: to acquire field data,
- Operations Flow: as distributed layer to enable application communication, and
- Management flow: to enable communication needed for application orchestration.

In accordance to a holistic security approach (i.e. in line with IEC62444), different areas of an automation system are network-separated from one another today. These measures based on partitioning and isolation (cell protection) oppose the architecture of a future automation system that is based on federation and distribution. However, cell protection will still be required also to operate traditional communication protocols in an industry-safe manner and thus be an integral part of an established security concept. Usually industrial production cells (on premise) and other cells (e.g. "cloud") as well are protected using firewalls which allow for opening connections from inside a cell to the outside, but not in opposite direction. In general, there is a need for a seamless protocol independent end-to-end connectivity between cloud and on-premise.

To achieve a seamless end-to-end connectivity across productions cells or on-premise and cloud, server-based VPN (virtual private network) solutions are used today. With such a solution a connection is build-up from a VPN Client inside a protected cell to a VPN server that is also reachable out of other protected networks (cells) (inside to outside). Thus, IP connections between VPN clients could be established that are managed by the VPN server.

A main disadvantage of such a centralized approach is that the server exposes a single point of failure and will be a bottleneck when exposed to changing and in particular to high load demands. An underlaying VPN to achieve overall end-to-end IP-accessibility and implementing a data exchange platform on-top of this VPN would reduce the achievable "throughput" and "latency" for pure data-exchange use cases.

Resilience could also be achieved by meshing up separate (traditional) VPNs to a VPN cluster. However, this goes hand in hand with increased administration effort by maintaining different IP subnets. Scalability and Resilience are not achievable in a way that is transparent for the clients. Accordingly, the clients would have to be adapted for using or administration of multiple VPN connections simultaneously.

It is a task for the present invention to provide a communication solution which is secure, scalable, and overcomes the mentioned restrictions of the known approach.

The solution for this task proposes a "Communication Backbone", in particular a MQTT-cluster (also called MQTT broker cluster) with a number of MQTT brokers which act like one "logical" single but scalable MQTT broker, which allows a security controlled bidirectional data-exchange between devices in cloud and on-premise. Connected devices can exchange high frequent data with low latency (pure data-exchange use case). An additional IP layer on-top enables a security-controlled protocol independent communication between connected devices. Accordingly, the data packets of the IP-communication (e.g. TCP/IP, UDP and all other Internet Protocol messages, in particular Virtual Private Network traffic) are transmitted as payload of MQTT messages.

In particular, the solution is given by a method according to claim 1, and by a system according to claim 8.

The task is solved by a method for communication between clients in a distributed industrial environment, a first of the clients being part of a first cell and a second client being part of a second cell, the cells are network isolated but connected via an MQTT-broker cluster on application layer. In a first step, the first client connects to a MQTT Cluster via a first data connection and the second client connects to that MQTT cluster via a second data connection. In a second step, a common IP connection is established between the clients on top of the first and the second (data-)connection, the IP messages of the IP connection being transmitted by the MQTT cluster. With this method, a secure IP connection, e.g. a VPN-like IP tunnel, can be initiated by either of the clients, overcoming restrictions of separated networks. The IP connection benefits from the underlaying reliable, secure and scalable MQTT cluster, so that any IP connection is reliable, secure and has scalable bandwidth as well.

The task is also solved by a system for communication between clients in a distributed industrial environment, a first of the clients being part of a first cell and a second client being part of a second cell, the cells connected via at least one communication network. The first client and the second client are set up for connecting to a common MQTT Cluster via a first data connection initiated by the first client and a second data connection initiated by the second client, and the system is set up for establishing a common IP connection between the clients via the first and the second connection, the IP messages of the IP connection being transmitted by the MQTT cluster. With that system, the advantages discussed for the inventive method can be realized.

Advantageous embodiments are disclosed with the dependent patent claims. The disclosed features and advantages of the various claims can be combined.

The MQTT cluster comprises at least 2 MQTT brokers, the at least 2 MQTT brokers establishing one single logical MQTT broker. This can achieve better reliance and scalability of the network performance. Since the cluster behaves like one (logical) broker, the clients do not need to administrate multiple entry points of the connecting network.

In one embodiment, each of the clients registers at the MQTT cluster via a load balancer. In this example, the client just needs to address this one single entity which takes care about load distribution and for choosing of the best fitting MQTT broker in the broker-cluster. Advantageously, the load balancer is part of the same cell as the client, so the client does not need to address an entity outside of its own domain. The load balancer serves as a single, stable entry-point to the cluster. In case of changes in the cluster, e.g. in case of improving throughput by adding brokers, the client does not need to change its setup.

In an embodiment, each client registers at the MQTT cluster. The possibility to structure MQTT topics hierarchically allows the MQTT cluster for co-handling of multiple guest IP networks in parallel. Advantageously, the topics comprise the IP address elements. Using hierarchical structured addresses allows for structuring of a complex IP network on top of the MQTT cluster communication backbone.

In an embodiment, the IP connection employs an IP based tunneling protocol, i.e. a virtual private network (VPN) protocol.

In the following, an example of the inventive method will be discussed. It is also an example of an inventive system.

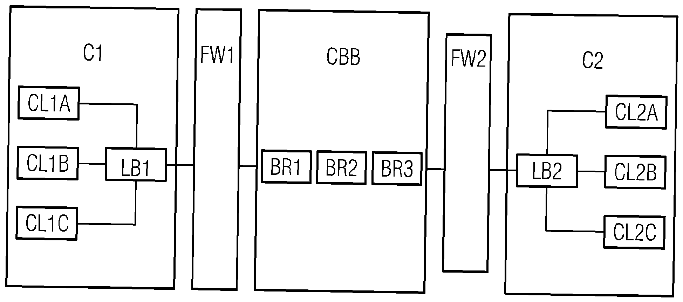

The figure shows a schematic example of two production cells with clients, the production cells being coupled via a MQTT broker cluster as communication backbone.

The figure shows two production cells C1, C2 with Clients CL1A, ..., CL2C distributed on the two cells C1, C2. Each of the cells C1, C2 employs its own firewall FW1, FW2 in respect to a communication backbone which is realized by a MQTT broker cluster (short: MQTT cluster) CBB, the MQTT cluster CBB employing a number of MQTT brokers BR1, ..., BR3. The cluster of MQTT brokers BR1, ..., BR3 acts as one logical MQTT broker. Each of the production cells C1, C2 employs its own "private" data network, which is protected, by means of the firewalls FW1, FW2, inter alia against incoming communication connections. The MQTT broker cluster CBB might be part of a third network, e.g. an intranet or the Internet or a "cloud".

In an embodiment, only one MQTT broker is used. In that case the load balancer is optional. However, even in this case the use of a load balancer is of advantage because the load balancer remains as single, stable entry point of the network, even in case the MQTT broker changes or a MQTT broker is added (thus forming a MQTT cluster later on) the client configuration does not need to be adapted.

The "Communication Backbone" consist of two parts.

First, the MQTT-Cluster approach ensures the exchange of high frequent data with low latency. The base idea of a resilient and scalable communication backbone is that an optional load balancer LB1, LB2 provides a single point of entry for MQTT clients CL1A, ..., CL2B and balances MQTT client's CL1A, ..., CL2C connections to different cluster MQTT brokers BR1, ..., BR3. The Broker cluster CBB is set up for distributing messages across the various cluster nodes according to existing subscriptions. Such "Topic routing" is core functionality of the cluster itself. The possibility to resume MQTT sessions regardless to which cluster broker BR1, ..., BR3 a client CL1A, ..., CL2C is connected ensures that the data-exchange could be continued without interruption after reconnecting. Thereby the following advantages could be realized:
- Resilience & Elimination of the single point of failure: Due that the cluster is build up by multiple brokers that act as one logical broker the single point of failure is eliminated. If one broker becomes unavailable, the logical broker as a whole is still working.
- Scalability: This load balanced cluster approach supports the scale out. Brokers could be added if additional computing power is needed.
- Zero Downtime upgrades: A Zero-Downtime Upgrade could easily be realized by integrating an up-to-date broker node before removing the old one. Because the MQTT client-broker connection is always initiated by the client, and thus the subordinate transport connection is always established from the inside to the outside, makes this solution compatible with established cell protection concepts.

It is recommended to integrate the Load Balancer LB1, LB2 as a part of the protected cell C1, C2. Insofar as this is supported by the chosen Load Balancer LB1, LB2, different alternatives, at which endpoints a TLS connection (TLS: Transport Layer Security) is terminated, are possible (Client - Broker; Client - Load Balancer, Load Balancer - Broker). One key point is that the cluster concept is also applied to overcome network restrictions due to the pattern that connections are build up from the inside of a cell C1, C2 to the outside.

Second, an IP layer on-top of the resilient and scalable MQTT broker cluster CBB enables the protocol independent communication of connected entities (here: the clients CL1A, ..., CL2C). As described above, a seamless end-to-end IP connectivity in a VPN manner but without the mentioned disadvantages which were needed to ensure a protocol independent communication in a security-controlled way.

The use of one common infrastructure supports a cost-efficient operation. A required certificate-management is also limited to the necessary extend because only one infrastructure must be secured.

By using the described backbone architecture as a carrier for the VPN, mandatory functions required for an industrial VPN to enable protocol independent communication are provided automatically:
- A bi-directional end-to-end data-exchange between all connected entities (cross-cell, on premise-cloud).
- Fault tolerance as a core functionality of the cluster architecture by avoiding the single point of failure
- The scalable and load balanced cluster approach enables vertical scale and avoid bottlenecks.
- Thus, it supports a high number of parallel connections
- Industrial grade security by certificate-based Server- and Client-Authentication and encryption
- Role-based model to authorize data-exchange on MQTT layer as another security feature.

The new approach "VPN on top of a data-exchange platform" meets requirements for high throughput and low latency for pure data-exchange use cases by using the data-exchange platform natively. Using the described cluster approach, capabilities like "fault tolerance and scalability" are provided automatically to the (overlaying) VPN if the named data-exchange platform is used as carrier.

## Claims

1. Method for communication between clients (CL1A, ..., CL2C) in a distributed industrial environment,
a first of the clients (CL1A, ..., CL1C) being part of a first cell (C1) and a second client (CL2A, ..., CL2C) being part of a second cell (C2), the cells (C1, C2) connected via at least one communication network, **characterized in,**
**that** in a first step the first client (CL1A, ..., CL1C) connects to a MQTT Cluster (CBB) via a first data connection and the second client (CL2A, ..., CL2C) connects to that MQTT cluster (CBB) via a second data connection, and
**that** in a second step a common IP connection is established between the clients (CL1A, ..., CL2C) via the first and the second connection, the IP messages of the IP connection being transmitted by the MQTT cluster (CBB).

2. The method of claim 1,
**characterized in,**
**that** the MQTT cluster (CBB) comprises at least 2 MQTT brokers (BR1, ..., BR3), the at least 2 MQTT brokers (BR1, ..., BR3) establishing one logical MQTT broker.

3. The method of claim 1 or 2,
**characterized in,**
**that** each of the clients (CL1A, ..., CL2C) registers at the MQTT cluster (CBB) via a load balancer (LB1, LB2) .

4. The method of claim 3,
**characterized in,**
**that** each cell (C1, C2) employs a local load balancer (LB1, LB2), the local load balancer (LB1, LB2) registering the client of its cell at the MQTT cluster (CBB).

5. The method of one of the preceding claims,
**characterized in,**
**that** each client (CL1A, ..., CL2C) registers at the MQTT cluster (CBB) with an identical topic or with a topic derived from a common hierarchical structure.

6. The method of one of the preceding claims,
**characterized in,**
**that** the IP connection employs an IP based tunneling protocol.

7. The method of claim 6,
**characterized in,**
**that** the IP based tunneling protocol is a virtual private network protocol.

8. A system for communication between clients (CL1A, ..., CL2C) in a distributed industrial environment,
a first of the clients (CL1A, ..., CL1C) being part of a first cell (C1) and a second client (CL2A, ..., CL2C) being part of a second cell (C2), the cells (C1, C2) connected via at least one communication network, **characterized in,**
**that** the first client (CL1A, ..., CL1C) and the second client (CL2A, ..., CL2C) are set up for connecting to a common MQTT Cluster (CBB) via a first data connection initiated by the first client (CL1A, ..., CL1C) and a second data connection initiated by the second client (CL2A, ..., CL2C), and
**that** the system is set up for establishing a common IP connection between the clients (CL1A, ..., CL2C) via the first and the second connection, the IP messages of the IP connection being transmitted by the MQTT cluster (CBB).

9. The system of claim 8,
**characterized in,**
**that** the MQTT cluster (CBB) comprises at least 2 MQTT brokers (BR1, ..., BR3), the at least 2 MQTT brokers (BR1, ..., BR3) establishing one logical MQTT broker.

10. The system of claim 8 or 9,
**characterized in,**
**that** each of the clients (CL1A, ..., CL2C) is set up to register at the MQTT cluster (CBB) via a load balancer (LB1, LB2).

11. The system of claim 10,
**characterized in,**
**that** each cell (C1, C2) comprises a local load balancer (LB1, LB2), the local load balancer (LB1, LB2) configured to register the client (CL1A, ..., CL2C) of its cell (C1, C2) at the MQTT cluster (CBB).

12. The system of one of claims 8 to 11,
**characterized in,**
**that** each client (CL1A, ..., CL2C) registers at the MQTT cluster (CBB) with an identical topic or with a topic derived from a common hierarchical structure.

13. The system of one of claims 8 to 12,
**characterized in,**
**that** the IP connection employs an IP based tunneling protocol.

14. The system of claim 13,
**characterized in,**
**that** the IP based tunneling protocol is a virtual private network protocol.
